# EUROPEAN PATENT APPLICATION

(11) **EP 4 350 857 A1**
(43) Date of publication of application: **10.04.2024**
(21) Application number: 22199748.9
(22) Date of filing: 05.10.2022
(51) Int. Cl.: H01M 50/213, H01M 50/342, H01M 50/60, H01M 50/627

(54) **DEVICE AND METHOD FOR LIMITING THE MAXIMUM TEMPERATURE OF A BATTERY UNIT**

(71) Applicant: Airbus Operations GmbH, 21129 Hamburg (DE)
(72) Inventor: Schöll, Robert, 21129 Hamburg (DE)
(74) Representative: Isarpatent

(57) **Abstract**

The present invention provides a device (1) for limiting the maximum temperature of a battery unit, in particular being used in an aircraft and/or spacecraft, the device (1) comprising: a fluid tank (2) containing a fluid (3); a battery unit (4) having a housing (5), wherein the housing (5) comprises a venting opening (6) located on an upper area of the housing (5); and a conduit (7) fluidly connecting the fluid tank (2) with the inside of the housing (5) of the battery unit (4), wherein the conduit (7) comprises an automatically openable valve (8) for releasing the fluid (3) of the fluid tank through the conduit (2) into the inside of the housing (5) of the battery unit in case a predetermined maximum temperature of the battery unit (4) at a predetermined position in the inside of the housing (5) is exceeded. Further the present invention provides a method (V) for limiting the maximum temperature of a battery unit as well as an aircraft (100) comprising such device (1).

## Description

The invention relates to a device as well as to a method for limiting the maximum temperature of a battery unit. The invention is furthermore concerned with an aircraft containing such a device.

In means of transport, such as aircraft, spacecraft, buses, trains or ships, more and more electronic components, electronic assemblies and electronic equipment, which may be grouped together under the term electronics for short, are being employed. Electronics on board these means of transport are able to still further increase not only the comfort of the passengers, but also the safety on board. In operation, any form of electronics produces heat and must therefore be cooled. In the event of a thermal runaway of a Li-Ion cell, a substantial amount of heat is released. To avoid heat propagation from the Li-Ion cell to neighboring cells immersion cooling systems are provided.

For example document US 10,396,416 B2 describes a material consisting of an insulating, ceramic-based matrix into which an endothermic gas-generating material is incorporated for the intended purpose of protecting electrical energy storage devices from cascading thermal runaway. It further describes a solid matrix around the cells, which due to the combination with a solid endothermic gas-generating material has the capability to remove heat from a damaged cell while limiting heat transfer to neighboring cells, thereby avoiding the thermal runaway of the complete battery.

Furthermore, document DE 10 2012 204 033 A1 describes a method and a device for detecting and suppressing of the thermal runaway of an energy storage unit, which consists of at least one cell, wherein for suppressing the thermal runaway a material is used which is sprayed, in particular an extinguishing agent is used.

In document EP 2 302 727 A1 an active thermal runaway mitigation system is provided that mitigates the effects of a single cell undergoing thermal runaway, thereby preventing the propagation of the thermal runaway event to neighboring cells within the battery pack, wherein the system includes at least one, fluid-containing conduit in proximity to the cells within the battery pack. The conduit includes a plurality of breach points in proximity to the subset of cells, where each breach point is configured to form a breach at a preset temperature that is lower than the melting temperature of the conduit. Once a breach is formed, the fluid contained within the conduit is discharged through the breach.

Nevertheless, state-of-the-art battery quenching systems contain a quenching fluid inside the battery or supply fluid with an active pump. Further, known systems focus on providing runaway-suppressing flow for a limited amount of time. Other thermal runaway protection systems limit the internal heat transfer to stop propagation, but the heat largely stays inside the battery.

According to the invention, this problem is solved in each case by the subject matters of the independent claims.

According to a first aspect of the invention, a device for limiting the maximum temperature of a battery unit is provided. The device comprises a fluid tank containing a fluid and a battery unit having a housing, wherein the housing comprises a venting opening located on an upper area of the housing.

Furthermore, the device comprises a conduit fluidly connecting the fluid tank with the inside of the housing of the battery unit, wherein the conduit comprises an automatically openable valve for releasing the fluid of the fluid tank through the conduit into the inside of the housing of the battery unit in case a predetermined maximum temperature of the battery unit at a predetermined position in the inside of the housing is exceeded. In particular, a device for limiting the maximum temperature of a battery unit being used in an aircraft and/or spacecraft is provided.

According to a second aspect of the invention, an aircraft comprising a device according to the invention is provided.

According to a third aspect of the invention, a method for limiting the maximum temperature of a battery unit is provided. The method comprises the steps of providing a fluid tank containing a fluid and fluidly connecting the fluid tank with the inside of a housing of the battery unit by a conduit, wherein the housing comprises a venting opening located on an upper area of the housing. Furthermore, the method comprises the step of automatically opening a valve for releasing the fluid of the fluid tank through the conduit into the inside of the housing of the battery unit when exceeding a predetermined maximum temperature of the battery unit at a predetermined position in the inside of the housing. Moreover, the method comprises the step of limiting the maximum temperature of the battery unit by means of heat convection from the battery unit to the fluid. In particular, a method for limiting the maximum temperature of a battery unit being used in an aircraft and/or spacecraft is provided.

A fundamental concept of the invention is to avoiding a critical heating, a so-called thermal runaway, of the battery unit by cooling down the inside of the battery unit with the fluid. The invention is grounded in the idea that removing heat and reducing temperature is the best defense against thermal runaway and propagation. The fluid is stored in the fluid tank at a temperature below the maximum temperature of the battery unit. Further, different trade-offs in thermal vs. other capabilities influence the choice of the fluid to be technically appropriate for the present invention. In the event of a thermal runaway the housing of the battery unit is flooded with the fluid, wherein a temperature of the battery unit is reduced to a safe temperature level. In particular, reducing the heat inside the battery unit is advantageous for large battery units like propulsive battery units which are not easily removed from the aircraft, for example. The fluid of the fluid tank is used in the event of a thermal runaway. The thermal runaway is directly based on a thermodynamic/chemical reaction dynamic level. According to the invention neither a directed return flow nor a heat exchanger is needed. Furthermore, the weight of the device is affected by the size of the device.

A particular advantage in the solution according to an aspect of the invention is that it does not interfere with nominal axial cell cooling of the battery unit, e.g. with coldplates. That means the present invention can be established as an additional passive safety device besides an active cooling system for the battery unit. Furthermore, the fluid can thermally couple the inside of the battery unit to the housing with a higher efficiency for supporting a secondary heat transmission to the housing and the environment subsequently. The invention can further be configured as a passive or redundant system. Nevertheless, due to the high thermal performance of the present invention, other thermal runaway protection systems can be omitted from the battery unit.

Advantageous embodiments and further developments emerge from the description with reference to the figures.

According to some aspects of the device according to the invention, the predetermined maximum temperature is in the range of about 60 °C to about 100 °C. Preferably, the predetermined maximum temperature is in the range of about 65 °C to about 80 °C. In particular, the predetermined maximum temperature is at the amount of about 70 °C. In this way, a thermal runaway can be stopped at a very early moment since the temperature inside the battery unit increases rapidly in case of a thermal runaway. This can also avoid damages to the housing or other parts of the battery unit.

According to some further aspects of the device according to the invention, the fluid is an aqueous solution, in particular the fluid is water. Thus, the fluid can be composed of cheap components like water being available in high amounts. Furthermore, the fluid can have suitable flow properties for easily flowing through the conduit.

According to some further aspects of the device according to the invention, the battery unit further comprises a plurality of cells inside the housing and battery modules physically subdividing the plurality of cells of the battery unit, wherein at least one of the battery modules is fluidly connected to the conduit. Thus, the amount of the fluid being necessary to be filled in the battery unit can be reduced since only the concerned battery module can be filled with the fluid not affecting the other battery modules. Therefore, the need for additional spacing and/or thermal insulation between the plurality of cells to stop or slow down thermal runaways is reduced, thereby enabling very high battery energy density.

According to some further aspects of the device according to the invention, the fluid is configured such that the fluid at least partially changes its aggregate status from liquid to gaseous at the predetermined maximum temperature of the battery unit. Thus, the fluid can be designed to evaporate at the predetermined maximum temperature, wherein the predetermined maximum temperature is kept as long as liquid fluid is present. That means the predetermined maximum temperature can correspond to the boiling point of the fluid. Further, the gaseous fluid can exit the battery unit through the venting opening in the housing, thereby transporting thermal energy from the inside of the housing to the environment of the battery unit.

According to some further aspects of the device according to the invention, the automatically openable valve is configured as a melting plug, a heat sensitive valve, a controllable valve or a similar valve device. Thus, the melting plug can release the fluid in case of a thermal runaway event even when electrical power is lost or mechanical dysfunctionalities would block an actuated valve. Furthermore, the number of components for the automatically openable valve can be reduced since the melting plug and the heat sensitive valve do not need a temperature sensor and cabling from that. Also commercial off the shelf equipment can be used for the automatically openable valve, such equipment being cheaper and easier to get than special assemblies.

According to some further aspects of the device according to the invention, the battery unit further comprises a liquid level sensor being positioned inside the housing and being mechanically and/or electromechanically coupled to the automatically openable valve. Thus a liquid level in the housing or in one of the battery modules can be detected after releasing the fluid from the fluid tank.

According to some further aspects of the device according to the invention, the device comprises a plurality of fluid tanks containing a fluid, wherein each of the plurality of fluid tanks is fluidly connected with the inside of the battery unit. In this way, only one fluid tank can release its contained fluid into the battery unit as a first action in case of the thermal runaway, wherein the rest of the plurality of fluid tanks keeps the fluid for a further thermal runaway. Thus, the device can also provide fluid for a second action in case a further thermal runaway starts. Alternatively or additionally, the device can also provide fluid for a second action when the liquid level drops after filling the battery unit or the battery module with the fluid in the first action due to evaporation of the fluid.

According to some aspects of the method according to the invention, the method further comprises a step of filling the inside of the battery unit with the fluid of the fluid tank by the use of gravity, by the use of a pump and/or by the use of a compressor. For using the gravity from earth the fluid tank is positioned at a higher potential level than the battery unit. In this way, filling the inside of the battery is unpowered and therefore not affected by loss of electrical power or controlling problems. Alternatively or additionally, for filling the inside of the battery unit with the fluid of the fluid tank the pump or the compressor can be used to have a defined flow velocity of the fluid in the conduit. Furthermore, the pump or the compressor can be used in a zone or a state where a gravitational force on the device is lower than 3 m/s², in particular lower than 2 m/s².

According to some embodiments of the method according to the invention, the method further comprises a step of at least partially changing the aggregate status of the fluid in the inside of the battery unit from liquid to gaseous at the predetermined maximum temperature of the battery unit, wherein the gaseous fluid exits the housing through the venting opening. Thus, the fluid can be designed to evaporate at the predetermined maximum temperature, wherein the predetermined maximum temperature is kept as long as liquid fluid is present.

That means the predetermined maximum temperature can correspond to the boiling point of the fluid. Further, the gaseous fluid can exit the battery unit through the venting opening in the housing, thereby transporting thermal energy from the inside of the housing to the environment of the battery unit.

According to some further embodiments of the method according to the invention, the battery unit comprises a plurality of cells inside the housing and battery modules physically subdividing the plurality of cells of the battery unit, wherein the step of automatically opening the valve includes releasing the fluid through the conduit to at least one of the physically subdivided battery modules when exceeding a predetermined maximum temperature of the at least one of the physically subdivided battery modules. Thus, the amount of the fluid being necessary to be filled in the battery unit can be reduced since only the concerned battery module can be filled with the fluid not affecting the other battery modules. Therefore, the need for additional spacing and/or thermal insulation between the plurality of cells to stop or slow down thermal runaways is reduced, thereby enabling very high battery energy density.

According to some further aspects of the method according to the invention, the method further comprises a step of closing/opening the automatically openable valve depending on a liquid level inside the housing detected by a liquid level sensor being positioned inside the housing and being mechanically and/or electromechanically coupled to the automatically openable valve for keeping the liquid level at a predetermined level. Thus, a liquid level in the housing or in one of the battery modules can be detected after releasing the fluid from the fluid tank.

According to some further aspects of the method according to the invention, the step of automatically opening the valve includes melting of the valve at the predetermined maximum temperature, the valve being positioned at the predetermined position in the inside of the housing.

The present invention is explained more specifically below on the basis of the exemplary embodiments indicated in the schematic figures, in which:
- Fig. 1: shows a schematic illustration of a device for limiting the maximum temperature of a battery unit according to an embodiment of the invention;
- Fig. 2: shows a schematic illustration of a device for limiting the maximum temperature of a battery unit with a plurality of cells and battery modules physically subdividing the plurality of cells according to a further embodiment of the invention;
- Fig. 3: shows a schematic illustration of a device for limiting the maximum temperature of a battery unit with a plurality of cells and battery modules physically subdividing the plurality of cells according to a further embodiment of the invention;
- Fig. 4: shows a schematic illustration of a device for limiting the maximum temperature of a battery unit with a liquid level sensor as well as a temperature sensor inside the battery unit according to a further embodiment of the invention;
- Fig. 5: shows a schematic illustration of a device for limiting the maximum temperature of a battery unit with a plurality of fluid tanks and battery modules being fluidly connected with the plurality of fluid tanks according to a further embodiment of the invention;
- Fig. 6: shows a schematic illustration of a battery unit and a battery module, respectively, comprising a liquid level sensor for detecting a liquid level in the battery unit or the battery module according to a further embodiment of the invention;
- Fig. 7: shows a flow chart for a method for limiting the maximum temperature of a battery unit according to a further embodiment of the invention.

The accompanying figures are intended to convey a further understanding of the embodiments of the invention. They illustrate embodiments and are used in conjunction with the description to explain principles and concepts of the invention. Other embodiments and many of the cited advantages emerge in light of the drawings. The elements of the drawings are not necessarily shown to scale in relation to one another. Direction-indicating terminology such as for example "at the top", "at the bottom", "on the left", "on the right", "above", "below", "horizontally", "vertically", "at the front", "at the rear" and similar statements are merely used for explanatory purposes and do not serve to restrict the generality to specific configurations as shown in the figures.

In the figures of the drawing, elements, features and components that are the same, have the same function and have the same effect are each provided with the same reference signs - unless explained otherwise.

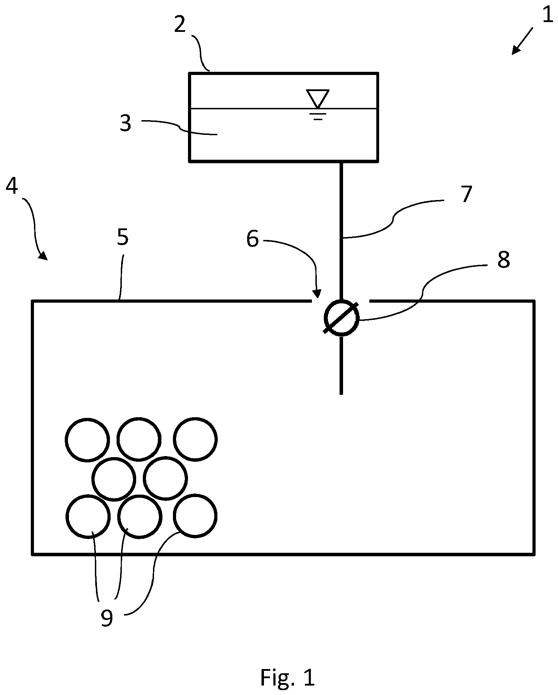

Fig. 1 shows a schematic illustration of a device 1 for limiting the maximum temperature of a battery unit 4. The device 1 comprises a fluid tank 2, a fluid 3, a battery unit 4, a housing 5, a venting opening 6, a conduit 7, an automatically openable valve 8 and at least one cell 9 inside the housing 5.

The fluid tank 2 contains the fluid 3. For example, the fluid tank 2 is impermeable. Preferably, the fluid tank 2 is configured as a pressure tank. Exemplarily, the fluid tank 2 is located outside of the battery unit 4, as it is shown in Fig. 1. Nevertheless, the fluid tank 2 can be located inside the battery unit 4 or attached to the housing 5 of the battery unit 4, wherein the fluid tank 2 can be located completely inside or outside or area by area inside and outside of the battery unit 4. Preferably, the fluid tank 2 is located above the at least one cell 9. The amount of fluid 3 contained in the fluid tank 2 can depend on the amount of fluid needed to fill the inside of the battery unit 4 up to a specific liquid level.

Furthermore, the fluid tank 2 is fluidly coupled to the conduit 7. The conduit 7 is also fluidly coupled to the housing 5 of the battery unit 4 such that the fluid 3 flowing through the conduit 7 finally flows into the housing 5. The fluid 3 flows into the housing 5 of the battery unit 4 by the use of gravity, for instance.

Exemplarily, the conduit 7 reaches through the venting opening 6 into the housing 5. In particular, the venting opening 6 is positioned in an upper area of the housing 5. The venting opening 6 can be configured as a hole, a slot or the like. The venting opening 6 has a bigger size than the cross-section area of the conduit 7 in the area where the conduit 7 penetrates the venting opening 6. Of course, the venting opening 6 does not need to have a bigger size than the cross-section area of the conduit 7 in a configuration in which the conduit 7 does not penetrate the venting opening 6.

Further, the conduit 7 comprises the automatically openable valve 8 for releasing the fluid 3 out of the fluid tank 2 in case a predetermined maximum temperature of the battery unit 4 at a predetermined position in the inside of the housing 5 is exceeded. The automatically openable valve 8 is located inside the housing 5 and configured as a melting plug, for example. In particular, the automatically openable valve 8 is located in the region of the venting opening 6 and/or in an upper area of the housing 5. According to the embodiment of Fig. 1 the automatically openable valve 8 is also configured to melt at predetermined maximum temperature of the battery unit 4. Thereby, the position of the automatically openable valve 8 corresponds to the predetermined position in the inside of the housing 5.

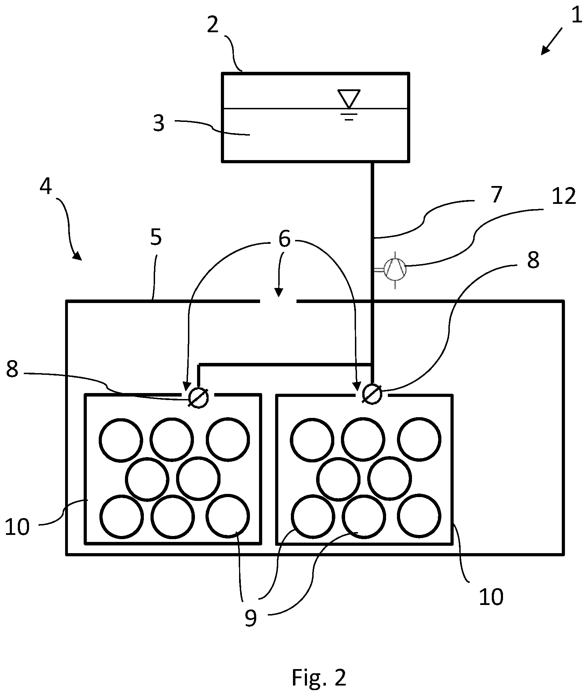

Fig. 2 shows a schematic illustration of a device 1 for limiting the maximum temperature of a battery unit 4 with a plurality of cells 9 and battery modules 10 physically subdividing the plurality of cells 9. Furthermore, the device 1 comprises a fluid tank 2, a fluid 3, a battery unit 4, a housing 5, three venting openings 6, a conduit 7, two automatically openable valves 8 and a pump or compressor 12.

In this exemplary embodiment, the device 1 comprises two battery modules 10, but is not limited to this number and can also comprise more than two battery modules 10. Preferably, each battery module 10 comprises a housing comprising a venting opening 6. At least one of the battery modules 10, in particular each battery module 10 is fluidly connected to the fluid tank 2 by means of the conduit 7. The battery modules 10 are located in the housing 5 of the battery unit 4.

The conduit 7 can comprise a bifurcation point for fluidly connecting two or more battery modules 10 to the fluid tank 2 dividing the conduit 7 in a main part, being between the fluid tank 2 and the bifurcation point, and a part of branches, being between the bifurcation point and the battery modules 10. Alternatively, the conduit 7 comprises two or more independent branches each fluidly connecting the fluid tank 2 with at least one of the battery modules 10.

The amount of fluid 3 contained in the fluid tank 2 can depend on the amount of fluid needed to fill the inside of one or a specific number of the battery modules 10 up to a specific liquid level. Alternatively, the amount of fluid 3 contained in the fluid tank 2 can depend on the amount of fluid needed to completely fill the inside of the battery unit 4 including the inside of the battery modules 10. For example, the fluid 3 can be an aqueous solution like a mixture of water with glycol or similar mixtures.

The battery modules 10 may physically subdivide the plurality of cells 9 in bundles of cells 9 having at least one cell 9 in one bundle, wherein each battery module contains the same size or number of bundled cells 9. Optionally, the battery modules 10 may physically subdivide the plurality of cells 9 in bundles of cells 9 having at least one cell 9 in one bundle, wherein each battery module contains a different size or number of bundled cells 9.

The pump or compressor 12 transports the fluid 3 through the conduit 7. Alternatively or additionally the fluid 3 is transported through the conduit 7 from the fluid tank 2 to the inside of the battery unit 4 and the inside of the battery modules 10, respectively, by the use of gravity.

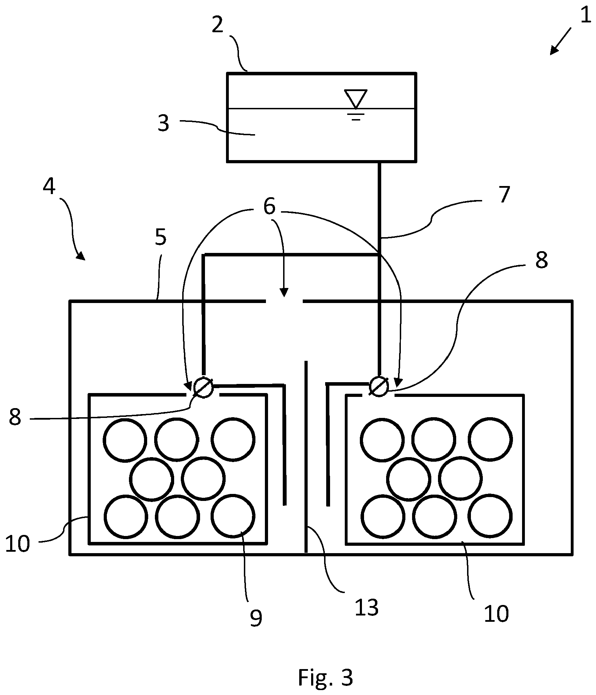

Fig. 3 shows a schematic illustration of a device 1 for limiting the maximum temperature of a battery unit 4 with a plurality of cells 9 and battery modules 10 physically subdividing the plurality of cells 9. The device 1 according to Fig. 3 substantially comprises the same features as the device 1 according to Fig. 2.

Thereby, the battery unit 4 further comprises a separation element 13 separating the battery modules 10 from one another. Furthermore, the conduit 7 fluidly connects the fluid tank 2 with the outside of the battery modules 10, for instance. Thus, the fluid 3 can surround the battery modules 10 being separated by the separation element 13. The separation element 13 can be impermeable such that the separation element 13 fluidly separates the surroundings of the battery modules 10.

Alternatively or additionally the inside of at least one of the battery modules 10 is fluidly connected to the fluid tank 2.

The venting opening 6 may comprise a protective grill, a strut or the like for blocking solid materials of a specific size and/or shape.

Advantageously, the configuration according to Fig. 3 can reduce heat propagation into adjacent battery modules 10 when the fluid 3 is released to the separated surroundings of the battery modules 10. Further, at least one of the battery modules 10 may be surrounded by a sponge structure or a wick structure for reducing sloshing effects or to counteract gravitational and inertial effects when the battery unit 4 accelerates or changes attitude. The wick structure in the meaning of this application is a structure that uses capillary action to move the liquid working fluid to the area of evaporation. Thereby, the wick structure can include grooves with a small cross section inside a monolithic base material, a screen/wire and a sintered powder metal.

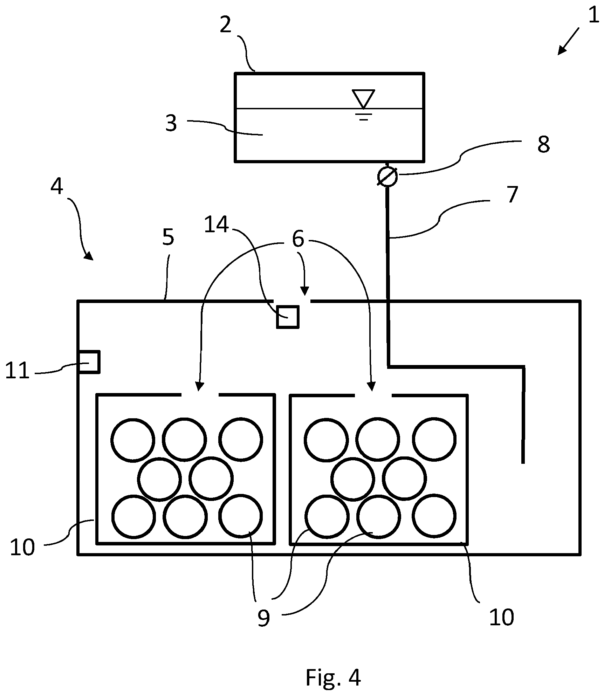

Fig. 4 shows a schematic illustration of a device 1 for limiting the maximum temperature of a battery unit 4 with a liquid level sensor 11 as well as a temperature sensor 14 inside the battery unit 4. Furthermore, the device 1 comprises a fluid tank 2, a fluid 3, a battery unit 4, a housing 5, a venting opening 6, a conduit 7, an automatically openable valve 8 and battery modules 10 physically subdividing a plurality of cells 9.

The conduit 7 comprises the automatically openable valve 8 for releasing the fluid 3 out of the fluid tank 2 in case a predetermined maximum temperature of the battery unit 4 at a predetermined position in the inside of the housing 5 is exceeded. The automatically openable valve 8 is located outside the housing 5 and configured as a controllable valve, for example. According to the embodiment of Fig. 4 the automatically openable valve 8 is configured to release the fluid 3 in case the predetermined maximum temperature of the battery unit 4 is detected by the temperature sensor 14. Thereby, the position of the temperature sensor 14 corresponds to the predetermined position in the inside of the housing 5. For example, the temperature sensor 14 is attached to the housing 5.

Furthermore, the conduit 7 fluidly connects the fluid tank 2 with the outside of the battery modules 10, for instance. Thus, the fluid 3 can surround the battery modules 10 after having been released from the fluid tank 2. As a result, the battery modules 10 do not need to be filled with the fluid 3.

The liquid level sensor 11 is positioned inside the housing 5 of the battery unit 4, preferably. Moreover, the liquid level sensor 11 can be electromechanically coupled to the automatically openable valve 8. In case the liquid level sensor 11 detects that a predetermined liquid level is present in the inside of the battery unit 4, the liquid level sensor 11 can transmit a command to the automatically openable valve 8 to close the automatically openable valve 8. Optionally, the automatically openable valve 8 can be re-opened when the liquid level sensor 11 detects that a liquid level in the inside of the battery unit 4 has fallen below the predetermined liquid level, for example due to evaporation of the fluid 3. In particular, the liquid level sensor 11 and the automatically openable valve 8 can be configured to trickle feed the inside of the battery unit 4 such that the predetermined liquid level is kept, though the fluid 3 continuously evaporates, that means partially changes its aggregate status from liquid to gaseous at the predetermined maximum temperature which exemplarily corresponds to the boiling point of the fluid 3.

Further, the fluid tank 2 can store an amount of fluid 3 that is sufficient to not only fill the battery modules 10 and/or the battery unit 4 in a first release, but replenish the fluid contained in the battery modules 10 and/or the battery unit 4 after the first release, which may be reduced for example due to evaporation, by a rest of the fluid 3 stored in the fluid tank 2 after the first release. For example, the fluid tank 2 can store as much fluid 3 as it is needed to fill the battery modules 10 and/or the battery unit 4 in a second release after the fluid 3 released in the first release is lost for example due to evaporation. In case that a chemical reaction of the plurality of cells 9 with ambient oxygen is reduced, for example the fluid 3 released into one of the battery modules 10 and/or the battery unit 4 encloses the plurality of cells 9, a maximum energy release from the thermal runaway process is reduced and the amount of fluid 3 required for limiting the maximum temperature of the battery unit 4 is reduced.

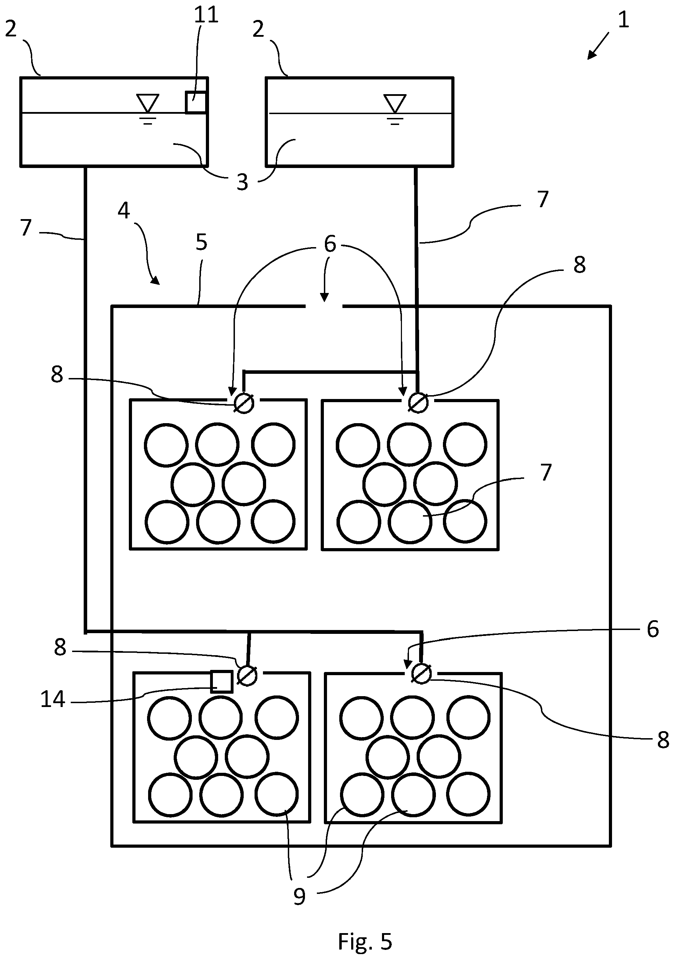

Fig. 5 shows a schematic illustration of a device 1 for limiting the maximum temperature of a battery unit 4 with a plurality of fluid tanks 2 and battery modules 10 being fluidly connected with the plurality of fluid tanks 2. Furthermore, the device 1 comprises a fluid 3, a battery unit 4, a housing 5, a venting opening 6, a conduit 7, an automatically openable valve 8, a liquid level sensor 11 and a temperature sensor 14.

The plurality of fluid tanks 2 can comprise fluid tanks 2 which are located outside the battery unit 4 and/or inside the battery unit 4. Preferably, the plurality of fluid tanks 2 contain the fluid 3 being water. The plurality of fluid tanks 2 may further comprise a thermal conditioning system, a pressurization system and/or an insulation system. Thus, the fluid 3 can be kept liquid when ambient conditions change.

The battery modules 10 physically subdivide the plurality of cells 9. Exemplarily, the plurality of fluid tanks 2 comprises two fluid tanks 2, wherein one of the two fluid tanks 2 is fluidly connected with two of the illustrated battery modules 10 and the other of the two fluid tanks 2 is fluidly connected with further two of the illustrated battery modules 10. But the plurality of fluid tanks 2 can also comprise more than two fluid tanks 2, wherein each fluid tank 2 can fluidly connect with a different number of battery modules 10. Optionally, the battery modules 10 can be fluidly connected to more than one of the plurality of fluid tanks 2. Thus, two or more of the plurality of fluid tanks 2 are available for limiting the maximum temperature of one of the battery modules 10, wherein the automatically openable valves 8 of the two or more of the plurality of fluid tanks 2 can be configured such that the fluid 3 contained in the two or more of the plurality of fluid tanks 2 is released sequentially. For example, the automatically openable valves 8 of the two or more of the plurality of fluid tanks 2 can be configured as a melting plug and as a controllable valve, wherein the melting plug melts and releases the fluid 3 before the controllable valve releases the fluid 3.

The liquid level sensor 11 can be located in the fluid tank 2. Alternatively or additionally, the liquid level sensor 11 can be located in the housing 5 of the battery unit and/or inside the battery modules 10. Moreover, the liquid level sensor 11 can be mechanically or electromechanically coupled to the automatically openable valve 8.

Further, the temperature sensor 14 can be located in the housing 5 of the battery unit, for example. Alternatively or additionally, the temperature sensor 14 can be located inside the battery modules 10. In particular, the temperature sensor 14 is located in an upper area of the housing 5 or of the battery modules 10. Moreover, the temperature sensor 14 can be electromechanically coupled to the automatically openable valve 8. Optionally, the automatically openable valve 8 is configured as a heat sensitive valve including a temperature sensing function.

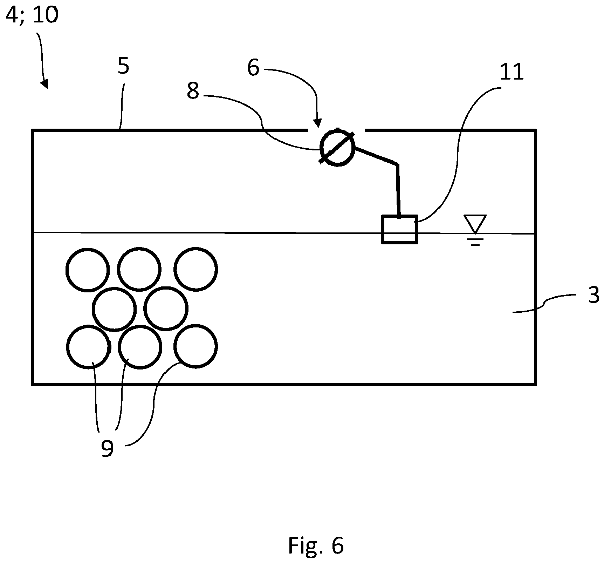

Fig. 6 shows a schematic illustration of a battery unit 4 and a battery module 10, respectively, comprising a liquid level sensor 11 for detecting a liquid level in the battery unit 4 or the battery module 10. Furthermore, the battery unit 4 or the battery module 10 comprises a fluid 3, a housing 5, a venting opening 6, an automatically openable valve 8 and a plurality of cells 9.

The battery unit 4 or the battery module 10 contains the fluid 3 after the automatically openable valve 8 has released the fluid 3 from a fluid tank 2. Preferably, the liquid level sensor 11 is mechanically coupled to the automatically openable valve 8. In Fig. 6, the liquid level sensor 11 is exemplarily configured as a swimmer being mechanically coupled via an actuator linkage. Alternatively, the liquid level sensor 11 can be electromechanically, magnetically or electronically coupled to the automatically openable valve 8. Therefore, the automatically openable valve 8 can be opened when the liquid level sensor 11 detects that the liquid level in the inside of the battery unit 4 or the battery module 10 has fallen below the predetermined liquid level, for example due to evaporation of the fluid 3.

In particular, the liquid level sensor 11 is configured and/or arranged such that the plurality of cells 9 is positioned below the liquid level of the fluid 3. That means, the plurality of cells 9 is partially, in particular completely, flooded by the fluid 3.

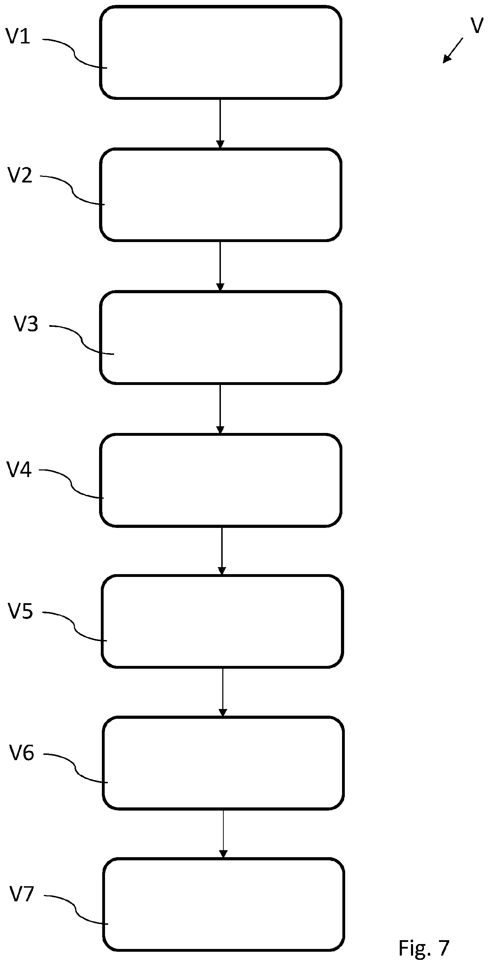

Fig. 7 shows a flow chart for a method V for limiting the maximum temperature of a battery unit 4. The method V comprises a step of providing V1 a fluid tank 2 containing a fluid 3. For example, the fluid tank 2 can be configured and/or positioned according to the embodiments of Fig. 1 to Fig. 5.

Furthermore, the method V comprises a step of fluidly connecting V2 the fluid tank 2 with the inside of a housing 5 of the battery unit 4 by a conduit 7. Thereby, the housing 5 comprises a venting opening 6 located on an upper area of the housing 5. Solid or fluid materials can pass through the venting opening 6. In particular, the venting opening 6 can be permeable to gas and/or liquid.

Moreover, the method V comprises a step of automatically opening V3 a valve 8 for releasing the fluid 3 of the fluid tank 2 through the conduit 7 into the inside of the housing 5 of the battery unit when exceeding a predetermined maximum temperature of the battery unit 4 at a predetermined position in the inside of the housing 5. The predetermined maximum temperature of the battery unit 4 is about 70 °C, for example. At the moment a temperature of the battery unit 4 exceeds the predetermined maximum temperature of the battery unit 4 at the predetermined position in the inside of the housing 5 the automatically openable valve 8 can release the fluid 3 of the fluid tank 2.

Optionally, the step of automatically opening V3 the valve 8 includes melting of the automatically openable valve 8 at the predetermined maximum temperature.

When the valve 8 is molten the fluid 3 is released since the molten valve 8 leaves an outflow opening behind at its former position in the conduit 7. Thereby, the valve 8 is positioned at the predetermined position in the inside of the housing 5, for example. Alternatively, the temperature of the battery unit 4 can be measured by a temperature sensor 14 being positioned at the predetermined position in the inside of the housing 5, wherein the temperature sensor 14 may control the automatically openable valve 8.

Optionally, the battery unit 4 comprises a plurality of cells 9 inside the housing 5 and battery modules 10 physically subdividing the plurality of cells 9 of the battery unit. Further, the step of automatically opening V3 the valve 8 can include releasing the fluid 3 through the conduit 7 to at least one of the physically subdivided battery modules 10 when exceeding a predetermined maximum temperature of the at least one of the physically subdivided battery modules 10.

Optionally, the method V further comprises a step of filling V4 the inside of the battery unit 4 with the fluid 3 of the fluid tank 2 by the use of gravity, for example. Alternatively or additionally, the inside of the battery unit 4 can be filled with the fluid 3 of the fluid tank 2 by the use of a pump or by the use of a compressor 12. The gravity force transports the fluid 3 through the conduit 7 from the fluid tank 2 to the inside of the housing 5. This transport of the fluid 3 can be supported by the pump, for example. Therefore, the pump is attached to or integrated into the conduit 7. Furthermore, the conduit 7 may comprise two or more pipes, wherein the transport of the fluid 3 in at least one pipe of the conduit 7 is pump driven. Alternatively or additionally, wherein the transport of the fluid 3 in at least one pipe of the conduit 7 is gravity induced.

Additionally, the method V comprises a step of limiting V5 the maximum temperature of the battery unit 4 by means of heat convection from the battery unit 4 to the fluid 3. Heat convection, or simply convection, is heat transfer by mass motion of a fluid such as air or water when the heated fluid is caused to move away from the source of heat, carrying thermal energy with it. Convection above a hot surface occurs because hot air expands, becomes less dense, and rises. Likewise, hot water is less dense than cold water and rises, causing convection currents which transport thermal energy.

Optionally, the method V further comprises a step of at least partially changing V6 the aggregate status of the fluid 3 in the inside of the battery unit 4 from liquid to gaseous at the predetermined maximum temperature of the battery unit, wherein the gaseous fluid exits the housing 5 through the venting opening 6.

Optionally, the method V further comprises a step of closing/opening V7 the automatically openable valve 8 depending on a liquid level inside the housing 5 detected by a liquid level sensor 11. Thereby, the liquid level sensor 11 is positioned inside the housing 5 and is mechanically and/or electromechanically coupled to the automatically openable valve 8 for keeping the liquid level at a predetermined level. Thus, the fluid 3 which is changing its aggregate status to gaseous and leaving the housing through the venting opening 6 can be replenished as long as the fluid 3 in the inside of the battery unit 4 is evaporating. For example, the step of closing/opening V7 can be configured as a trickle feed supply system. The trickle feed supply system has a valve installed in a fluid meter of the conduit 7 that restricts the flow through the conduit 7, such that the fluid 3 trickles into the housing 5 of the battery unit 4. Releasing the fluid 3 may be controlled based on the liquid level inside the battery module 10 and/or based on the amount of fluid 3 released from the fluid tank 2 in the step of filling V4 the inside of the battery unit 4 detected by a liquid level sensor 5 of the fluid tank 2.

Optionally, the fluid 3 may comprise substances with differing potential for evaporation, for example the fluid 3 may comprise water and a freeze protection agent. The step of providing V1 a fluid tank 2 may include containing an amount of the fluid 3 such that the fluid 3 having a concentration of one of the substances with differing potential for evaporation, for example the freeze protection agent, released into the battery module 10 and/or the battery unit 4 is inflammable after the step of limiting V5 or after the step of at least partially changing V6.

In the detailed description above, various features have been combined in one or more examples in order to improve the rigorousness of the illustration. However, it should be clear in this case that the above description is of merely illustrative but in no way restrictive nature. It serves to cover all alternatives, modifications and equivalents of the various features and exemplary embodiments. Many other examples will be immediately and directly clear to a person skilled in the art on the basis of his knowledge in the art in consideration of the above description.

The exemplary embodiments have been chosen and described in order to be able to present the principles underlying the invention and their application possibilities in practice in the best possible way. As a result, those skilled in the art can optimally modify and utilize the invention and its various exemplary embodiments with regard to the intended purpose of use. In the claims and the description, the terms "including" and "having" are used as neutral linguistic concepts for the corresponding terms "comprising". Furthermore, use of the terms "a", "an" and "one" shall not in principle exclude the plurality of features and components described in this way.

While at least one exemplary embodiment of the present invention(s) is disclosed herein, it should be understood that modifications, substitutions and alternatives may be apparent to one of ordinary skill in the art and can be made without departing from the scope of this disclosure. This disclosure is intended to cover any adaptations or variations of the exemplary embodiment(s). In addition, in this disclosure, the terms "comprise" or "comprising" do not exclude other elements or steps, the terms "a" or "one" do not exclude a plural number, and the term "or" means either or both. Furthermore, characteristics or steps which have been described may also be used in combination with other characteristics or steps and in any order unless the disclosure or context suggests otherwise. This disclosure hereby incorporates by reference the complete disclosure of any patent or application from which it claims benefit or priority.

### Reference list

- 1: device
- 2: fluid tank
- 3: fluid
- 4: battery unit
- 5: housing
- 6: venting opening
- 7: conduit
- 8: automatically opening valve
- 9: plurality of cells
- 10: battery module
- 11: liquid level sensor
- 12: pump or compressor
- 13: separation element
- 14: temperature sensor

- V: method
- V1: providing
- V2: fluidly connecting
- V3: automatically opening
- V4: filling
- V5: limiting
- V6: at least partially changing
- V7: closing/opening

## Claims

1. Device (1) for limiting the maximum temperature of a battery unit, in particular being used in an aircraft and/or spacecraft, the device (1) comprising:
a fluid tank (2) containing a fluid (3);
a battery unit (4) having a housing (5), wherein the housing (5) comprises a venting opening (6) located on an upper area of the housing (5); and
a conduit (7) fluidly connecting the fluid tank (2) with the inside of the housing (5) of the battery unit (4), wherein the conduit (7) comprises an automatically openable valve (8) for releasing the fluid (3) of the fluid tank through the conduit (2) into the inside of the housing (5) of the battery unit in case a predetermined maximum temperature of the battery unit (4) at a predetermined position in the inside of the housing (5) is exceeded.

2. Device (1) according to claim 1, wherein the predetermined maximum temperature is in the range of about 60 °C to about 100 °C.

3. Device (1) according to claim 1 or 2, wherein the fluid (3) is an aqueous solution, in particular the fluid (3) is water.

4. Device (1) according to one of the preceding claims, wherein the battery unit (4) further comprises a plurality of cells (9) inside the housing (5) and battery modules (10) physically subdividing the plurality of cells (9) of the battery unit (4), wherein at least one of the battery modules (10) is fluidly connected to the conduit (7).

5. Device (1) according to one of the preceding claims, wherein the fluid (3) is configured such that the fluid at least partially changes its aggregate status from liquid to gaseous at the predetermined maximum temperature of the battery unit (4).

6. Device (1) according to one of the preceding claims, wherein the automatically openable valve (8) is configured as a melting plug, a heat sensitive valve or a controllable valve.

7. Device (1) according to one of the preceding claims, wherein the battery unit (4) further comprises a liquid level sensor (11) being positioned inside the housing (5) and being mechanically and/or electromechanically coupled to the automatically openable valve (8).

8. Device (1) according to one of the preceding claims, comprising a plurality of fluid tanks (2) containing a fluid (3), wherein each of the plurality of fluid tanks (2) is fluidly connected with the inside of the battery unit (4).

9. Aircraft with a device (1) according to one of the preceding claims.

10. Method (V) for limiting the maximum temperature of a battery unit, in particular being used in an aircraft and/or spacecraft, the method comprising the steps of:
providing (V1) a fluid tank (2) containing a fluid (3);
fluidly connecting (V2) the fluid tank (2) with the inside of a housing (5) of the battery unit (4) by a conduit (7), wherein the housing (5) comprises a venting opening (6) located on an upper area of the housing (5);
automatically opening (V3) a valve (8) for releasing the fluid (3) of the fluid tank (2) through the conduit (7) into the inside of the housing (5) of the battery unit when exceeding a predetermined maximum temperature of the battery unit (4) at a predetermined position in the inside of the housing (5); and
limiting (V5) the maximum temperature of the battery unit (4) by means of heat convection from the battery unit (4) to the fluid (3).

11. Method (V) according to claim 10, further comprising a step of filling (V4) the inside of the battery unit (4) with the fluid (3) of the fluid tank (2) by the use of gravity, by the use of a pump and/or by the use of a compressor.

12. Method (V) according to claim 10 or 11, further comprising a step of at least partially changing (V6) the aggregate status of the fluid (3) in the inside of the battery unit (4) from liquid to gaseous at the predetermined maximum temperature of the battery unit, wherein the gaseous fluid exits the housing (5) through the venting opening (6).

13. Method (V) according to one of claims 10 to 12, wherein the battery unit (4) comprises a plurality of cells (9) inside the housing (5) and battery modules (10) physically subdividing the plurality of cells (9) of the battery unit, wherein the step of automatically opening (V3) the valve (8) includes releasing the fluid (3) through the conduit (7) to at least one of the physically subdivided battery modules (10) when exceeding a predetermined maximum temperature of the at least one of the physically subdivided battery modules (10).

14. Method (V) according to one of claims 10 to 13, further comprising a step of closing/opening (V7) the automatically openable valve (8) depending on a liquid level inside the housing (5) detected by a liquid level sensor (11) being positioned inside the housing (5) and being mechanically and/or electromechanically coupled to the automatically openable valve (8) for keeping the liquid level at a predetermined level.

15. Method (V) according to one of claims 10 to 13, wherein the step of automatically opening (V3) the valve (8) includes melting of the valve (8) at the predetermined maximum temperature, the valve (8) being positioned at the predetermined position in the inside of the housing (5).
